# EUROPEAN PATENT APPLICATION

(11) **EP 4 723 010 A1**
(43) Date of publication of application: **08.04.2026**
(21) Application number: 24838608.8
(22) Date of filing: 27.06.2024
(51) Int. Cl.: G06Q 10/087

(54) **DATA PROCESSING METHOD FOR WAREHOUSE LOGISTICS SCHEME, AND RELATED APPARATUS**

(30) Priority: 07.07.2023 CN 202310839428
(71) Applicant: Hai Robotics Innovation Group Co., Ltd., Shenzhen, Guangdong 518000 (CN); Shenzhen Kubo Software Co., Ltd, Shenzhen, Guangdong 518100 (CN)
(72) Inventor: CHEN, Yuqi, Shenzhen, Guangdong 518000 (CN); YANG, Suimei, Shenzhen, Guangdong 518000 (CN); AI, Xin, Shenzhen, Guangdong 518100 (CN)
(74) Representative: Gulde & Partner
(86) International application number: PCT/CN2024/102114
(87) International publication number: WO 2025/011352

(57) **Abstract**

This application provides a data processing method for a warehousing logistics solution and a related apparatus, performed by a terminal device. The method includes: determining project information of a target project in response to an information input operation of a target user for the target project; sending the project information of the target project to a server; receiving, from the server, a solution details interface for the target project, where the solution details interface includes a display area for a reference warehousing logistics solution, and the display area for the reference warehousing logistics solution is used for three-dimensionally displaying a reference warehousing logistics solution generated by the server for the target project; and displaying the solution details interface. In this way, functions of a system are enriched, intelligence of the system is improved, time consumed by the user for designing a detailed warehousing logistics solution for the target project is reduced, and solution determining efficiency is improved.

## Description

### CROSS-REFERENCES

This application claims priority to Chinese Patent Application No. 202310839428.4, filed with the China National Intellectual Property Administration on July 7, 2023 and entitled "DATA PROCESSING METHOD FOR WAREHOUSING LOGISTICS SOLUTION, AND RELATED APPARATUS", which is incorporated herein by reference in its entirety.

### TECHNICAL FIELD

This application belongs to the field of intelligent warehousing, and specifically, to a data processing method for a warehousing logistics solution, and a related apparatus.

### BACKGROUND OF THE INVENTION

Generally, a warehousing logistics automation solution (a warehousing logistics solution for short below) usually needs many links such as device model selection, solution design, simulation verification, and so on. The solution design link is the most important, and is the most valuable link for enterprise users. However, in related arts and a current market, a system for processing a warehousing logistics solution used by a supplier of the warehousing logistics solution needs to frequently perform interaction with an enterprise user in a solution design link, to obtain solution requirements of the enterprise user. Consequently, the solution design cycle is long, prolonging an actual implementation cycle of a warehousing logistics project of the enterprise. In addition, after the warehousing logistics solution is designed, an existing system for processing a warehousing logistics solution can only provide a plan, and cannot three-dimensionally display the entire warehousing logistics solution in a visual manner. Consequently, the display is not intuitive, and the system lacks intelligence, affecting use experience of the enterprise user.

### SUMMARY OF THE INVENTION

This application provides a data processing method for a warehousing logistics solution and a system, to improve intelligence of a warehousing logistics processing system, shorten an actual implementation cycle of a warehousing logistics project of an enterprise, and three-dimensionally display the entire warehousing logistics solution in a visual manner, thereby improving use experience of an enterprise user.

According to a first aspect, an embodiment of this application provides a data processing method for a warehousing logistics solution, performed by a terminal device of a system for processing a warehousing logistics solution. The system for processing the warehousing logistics solution includes the terminal device and a server. The method includes:
determining project information of a target project in response to an information input operation of a target user for the target project, where the target project is a warehousing logistics project, and the project information is configuration information associated with the warehousing logistics project;
sending the project information of the target project to the server;
receiving, from the server, a solution details interface for the target project, where the solution details interface includes a display area for a reference warehousing logistics solution, the display area for the reference warehousing logistics solution is used for three-dimensionally displaying a reference warehousing logistics solution generated by the server for the target project, the reference warehousing logistics solution includes a reference hardware solution and a reference software solution, the reference hardware solution is used for indicating a hardware device required when the target project is implemented according to the reference warehousing logistics solution, the hardware device includes a warehousing robot, and the reference software solution includes a software function for implementing a warehousing function based on the warehousing robot; and
displaying the solution details interface.

Further, the determining project information of the target project in response to the information input operation of the target user for the target project includes:
displaying an editable interface for the target project in response to an upload operation of the target user for an auxiliary design document of the target project, where the editable interface includes a module placement area, a plurality of draggable modules, and a project information determining area, and the draggable module is used for indicating the hardware device;
updating the module placement area in response to a placement operation of the target user for one or more draggable modules in the plurality of draggable modules, and displaying an updated module placement area, where the placement operation is an operation of dragging the one or more draggable modules into the module placement area; and
determining, in response to a user operation of the target user for the project information determining area, the project information of the target project based on the updated module placement area.

Further, after the displaying the editable interface, the method further includes:
displaying parameter information of a first draggable module in response to a user operation of the target user for the first draggable module, where the first draggable module is any one of the plurality of draggable modules; and
changing, in response to a change operation of the target user for the parameter information of the first draggable module, the first draggable module to a second draggable module, where the second draggable module is the first draggable module with the parameter information being changed.

Further, the determining project information of the target project in response to the information input operation of the target user for the target project includes:
displaying, in response to the information input operation of the target user for the target project in a project information input area on an information input interface, information input by the target user in the project information input area; and
determining, in response to a user operation of the target user for a project information determining area on the information input interface, the project information of the target project based on the information displayed in the project information input area.

Further, the project information input area includes a service field input area; and the determining project information of the target project in response to the information input operation of the target user for the target project includes:
generating a first filtering instruction in response to the information input operation of the target user for a service field of the target project in the service field input area, where the first filtering instruction is used for indicating the server to filter a first solution set, and a solution in the first solution set is a solution conforming to the service field of the target project;
receiving the first solution set from the server, and displaying the solution in the first solution set on the information input interface;
marking, in response to a selection operation of the target user for one or more pieces of solution information in the first solution set, the one or more pieces of solution information as a selected state; and
determining, in response to the user operation of the target user for the project information determining area, the project information of the target project based on the solution information in the selected state on the information input interface.

Further, the solution details interface includes a solution modification area and a solution determining area; and after the reference warehousing logistics solution is displayed, the method further includes:
generating a solution modification instruction if a user operation of the target user for the solution modification area is detected, and sending the solution modification instruction to the server, where the solution modification instruction is used for indicating the server to generate an updated solution details interface; and receiving the updated solution details interface from the server; and/or
generating a solution determining instruction if a user operation of the target user for the solution determining area is detected, and sending the solution determining instruction to the server, where the solution determining instruction is used for indicating the server to generate a target warehousing logistics solution based on the solution details interface currently displayed by the terminal device; and receiving a target simulation interface from the server, where the target simulation interface is generated based on the target warehousing logistics solution, the target simulation interface includes a simulation animation playing area, the simulation animation playing area is used for playing a target simulation animation, and the target simulation animation is process images of running the target project according to the target warehousing logistics solution;
receiving the target simulation interface from the server; and
playing the target simulation animation in response to a user operation of the target user for the simulation animation playing area.

Further, the target simulation interface further includes an animation speed adjustment area; and the method further includes:
adjusting a playing speed of the target simulation animation in response to a user operation of the target user for the animation speed adjustment area.

Further, the playing speed of the target simulation animation is a 1X speed, and the target simulation interface further includes a simulation interaction function area; and the method further includes:
generating a simulation interaction request instruction in response to a user operation of the target user for the simulation interaction function area, where the simulation interaction request instruction is used for indicating the server to generate a target virtual three-dimensional scene for function interaction;
displaying the target virtual three-dimensional scene when the target virtual three-dimensional scene from the server is received; and
invoking a target software solution in the target virtual three-dimensional scene in response to a function interaction operation of the target user in the target virtual three-dimensional scene, to cause the warehousing robot to execute a warehousing logistics task in the target virtual three-dimensional scene based on a task instruction corresponding to the function interaction operation.

It can be seen that, in this embodiment of this application, a terminal device determines project information in response to an information input operation of a user for a target project, and then displays, on a front end through data interaction with a server, a solution details interface of a reference warehousing logistics solution generated by the server, to three-dimensionally display the entire warehousing logistics solution in a visual manner. In this way, the user can intuitively view the reference warehousing logistics solution, and frequent interaction processes related to a project requirement are also reduced, so that functions of a system are enriched, and intelligence of the system is improved.

According to a second aspect, an embodiment of this application provides a data processing method for a warehousing logistics solution, performed by a server of a system for processing a warehousing logistics solution. The system for processing a warehousing logistics solution includes a terminal device and the server. The method includes:
receiving project information of a target project from the terminal device, where the target project is a warehousing logistics project, and the project information is configuration information associated with the warehousing logistics project;
determining a reference warehousing logistics solution for the target project based on the project information, where the reference warehousing logistics solution includes a reference hardware solution and a reference software solution, the reference hardware solution is used for indicating a hardware device required when the target project is implemented according to the reference warehousing logistics solution, the hardware device includes a warehousing robot, and the reference software solution includes a software function for implementing a warehousing function based on the warehousing robot; and
sending a solution details interface for the target project to the terminal device, where the solution details interface includes a display area for the reference warehousing logistics solution, and the display area for the reference warehousing logistics solution is used for three-dimensionally displaying the reference warehousing logistics solution.

Further, the determining the reference warehousing logistics solution for the target project based on the project information includes:
detecting whether a first warehousing logistics solution exists in historical warehousing logistics solutions, where solution information of the first warehousing logistics solution is the same as the project information of the target project; and
if the first warehousing logistics solution exists in the historical warehousing logistics solutions, determining that the first warehousing logistics solution is the reference warehousing logistics solution; or
if the first warehousing logistics solution does not exist in the historical warehousing logistics solutions, determining a target shelving unit layout solution based on the project information; and
determining the reference warehousing logistics solution according to the target shelving unit layout solution.

Further, the project information includes warehousing robot models and a warehouse parameter, and the warehouse parameter is used for indicating a shape and a size of a warehouse corresponding to the target project; and the determining the target shelving unit layout solution based on the project information includes:
obtaining a minimum passage width and a maximum warehousing height corresponding to each of the warehousing robot models;
determining a plurality of shelving unit layout solutions based on the minimum passage width, the maximum warehousing height, and the warehouse parameter; and
filtering the target shelving unit layout solution in the plurality of shelving unit layout solutions.

Further, the filtering the target shelving unit layout solution in the plurality of shelving unit layout solutions includes:
filtering, in the plurality of shelving unit layout solutions, a shelving unit layout solution with a largest quantity of storage positions as the target shelving unit layout solution.

Further, the solution details interface includes a solution modification area and a solution determining area; and after the sending the solution details interface to the terminal device, the method further includes:
updating, if a solution modification instruction from the terminal device is received, the reference warehousing logistics solution and the solution details interface based on the solution modification instruction, and sending an updated solution details interface to the terminal device, where the solution modification instruction is generated by the terminal device after a user operation of a target user for the solution modification area is detected; and/or
determining, if a solution determining instruction from the terminal device is received, that a warehousing logistics solution on the solution details interface currently displayed by the terminal device is a target warehousing logistics solution, where the solution determining instruction is generated by the terminal device after a user operation of the target user for the solution determining area is detected.

Further, before the receiving project information of a target project from the terminal device, the method further includes:
filtering, if a first filtering instruction from the terminal device is received, a first solution set based on the first filtering instruction, where a solution in the first solution set is a solution conforming to a service field of the target project; and
sending the first solution set to the terminal device.

Further, after the determining that the warehousing logistics solution on the solution details interface currently displayed by the terminal device is the target warehousing logistics solution, the method further includes:
generating a target simulation interface according to the target warehousing logistics solution, where the target simulation interface includes a simulation animation playing area, the simulation animation playing area is used for playing a target simulation animation, and the target simulation animation is process images of running the target project according to the target warehousing logistics solution; and
sending the target simulation image to the terminal device.

Further, the target simulation interface further includes an animation speed adjustment area, and the animation speed adjustment area is used for adjusting a playing speed of the target simulation animation.

Further, the playing speed of the target simulation animation is a 1X speed, and the target simulation interface further includes a simulation interaction function area; and after the sending the target simulation image to the terminal device, the method further includes:
generating, when a simulation interaction request instruction from the terminal device is received, a target virtual three-dimensional scene for function interaction according to the target warehousing logistics solution, where the simulation interaction request instruction is generated by the terminal device in response to a user operation of the target user for the simulation interaction function area; and
sending the target virtual three-dimensional scene to the terminal device.

It can be seen that, in this embodiment of this application, a server determines, through data interaction with a terminal device, a reference warehousing logistics solution for a target project based on project information entered by a user on the terminal device, and sends, to the terminal device, a solution details interface on which the reference warehousing logistics solution can be three-dimensionally displayed. In this way, the user can intuitively view details of the reference warehousing logistics solution, and frequent interaction processes related to a project requirement are also reduced, so that solution determining efficiency is improved, functions of a system are enriched, and intelligence of the system is improved.

According to a third aspect, an embodiment of this application provides an apparatus for processing a warehousing logistics solution, applied to a terminal device of a system for processing a warehousing logistics solution. The system for processing a warehousing logistics solution includes the terminal device and a server. The apparatus includes:
a response unit, configured to determine project information of a target project in response to an information input operation of a target user for the target project, where the target project is a warehousing logistics project, and the project information is configuration information associated with the warehousing logistics project;
a sending unit, configured to send the project information of the target project to the server;
a receiving unit, configured to receive, from the server, a solution details interface for the target project, where the solution details interface includes a display area for a reference warehousing logistics solution, the display area for the reference warehousing logistics solution is used for three-dimensionally displaying a reference warehousing logistics solution generated by the server for the target project, the reference warehousing logistics solution includes a reference hardware solution and a reference software solution, the reference hardware solution is used for indicating a hardware device required when the target project is implemented according to the reference warehousing logistics solution, the hardware device includes a warehousing robot, and the reference software solution includes a software function for implementing a warehousing function based on the warehousing robot; and
a display unit, configured to display the solution details interface.

According to a fourth aspect, an embodiment of this application provides an apparatus for processing a warehousing logistics solution, applied to a server of a system for processing a warehousing logistics solution. The system for processing a warehousing logistics solution includes a terminal device and the server. The apparatus includes:
a receiving unit, configured to receive project information of a target project from the terminal device, where the target project is a warehousing logistics project, and the project information is configuration information associated with the warehousing logistics project;
a determining unit, configured to determine a reference warehousing logistics solution for the target project based on the project information, where the reference warehousing logistics solution includes a reference hardware solution and a reference software solution, the reference hardware solution is used for indicating a hardware device required when the target project is implemented according to the reference warehousing logistics solution, the hardware device includes a warehousing robot, and the reference software solution includes a software function for implementing a warehousing function based on the warehousing robot; and
a sending unit, configured to send a solution details interface for the target project to the terminal device, where the solution details interface includes a display area for a reference warehousing logistics solution, and the display area for the reference warehousing logistics solution is used for three-dimensionally displaying the reference warehousing logistics solution.

According to a fifth aspect, an embodiment of this application provides a terminal device, including a processor, a memory, and one or more programs. The one or more programs are stored in the memory and configured to be executed by the processor, and the programs include instructions used for performing the steps in the first aspect of the embodiments of this application.

According to a sixth aspect, an embodiment of this application provides a server, including a processor, a memory, and one or more programs. The one or more programs are stored in the memory and configured to be executed by the processor, and the programs include instructions used for performing the steps in the second aspect of the embodiments of this application.

According to a seventh aspect, an embodiment of this application provides a computer-readable storage medium, storing a computer program/instructions. The computer program/the instructions, when executed by a processor, implement the steps in the first aspect or the second aspect of the embodiments of this application.

According to an eighth aspect, an embodiment of this application provides a computer program product, including a computer program. The computer program, when executed by a processor, implements the steps in the first aspect or the second aspect of the embodiments of this application.

According to a ninth aspect, an embodiment of this application provides a system for processing a warehousing logistics solution, including a terminal device and a server. The terminal device is configured to perform the steps in the first aspect of the embodiments of this application, and the server is configured to perform the steps in the second aspect of the embodiments of this application.

It can be seen that, in the embodiments of this application, a system for processing a warehousing logistics solution that can three-dimensionally display a designed warehousing logistics solution is provided for an enterprise user. The system can generate a complete warehousing logistics solution based on diversified project requirements of the enterprise user, to reduce frequent interaction in a solution design process, thereby improving solution design efficiency, and reducing time costs of the enterprise user. In addition, the designed warehousing logistics solution can be three-dimensionally displayed in a visual manner, and details of the entire solution are presented to the user, to greatly improve intelligence and functional richness of the system, thereby improving use experience of the enterprise user.

### BRIEF DESCRIPTION OF DRAWINGS

To describe the technical solutions of the embodiments of this application or the related art more clearly, the following briefly introduces the accompanying drawings required for describing the embodiments or the related art. Apparently, the accompanying drawings in the following description show only some embodiments recorded in this application, and a person of ordinary skill in the art still derives other drawings from these accompanying drawings without creative efforts.
FIG. 1 is a schematic structural diagram of a system for processing a warehousing logistics solution according to an embodiment of this application;
FIG. 2 is a schematic flowchart of a data processing method for a warehousing logistics solution according to an embodiment of this application;
FIG. 3a is an exemplary simplified diagram of a warehousing robot model selection interface according to an embodiment of this application;
FIG. 3b is an exemplary simplified diagram of another warehousing robot model selection interface according to an embodiment of this application;
FIG. 3c is an exemplary simplified diagram of still another warehousing robot model selection interface according to an embodiment of this application;
FIG. 4 is an exemplary simplified diagram of a warehousing robot information configuration interface according to an embodiment of this application;
FIG. 5a is an exemplary simplified diagram of an editable interface according to an embodiment of this application;
FIG. 5b is an exemplary simplified diagram of another editable interface according to an embodiment of this application;
FIG. 6a is an exemplary simplified diagram of an information input interface according to an embodiment of this application;
FIG. 6b is an exemplary simplified diagram of another information input interface according to an embodiment of this application;
FIG. 7 is an exemplary simplified diagram of a solution details interface according to an embodiment of this application;
FIG. 8a is an exemplary simplified diagram of a target simulation interface according to an embodiment of this application;
FIG. 8b is an exemplary simplified diagram of another target simulation interface according to an embodiment of this application;
FIG. 8c is an exemplary simplified diagram of still another target simulation interface according to an embodiment of this application;
FIG. 9 is a schematic flowchart of another method for managing a warehousing logistics solution according to an embodiment of this application;
FIG. 10a is a composition block diagram of functional units of an apparatus for processing a warehousing logistics solution according to an embodiment of this application;
FIG. 10b is a composition block diagram of functional units of another apparatus for processing a warehousing logistics solution according to an embodiment of this application;
FIG. 11a is a composition block diagram of functional units of still another apparatus for processing a warehousing logistics solution according to an embodiment of this application;
FIG. 11b is a composition block diagram of functional units of yet another apparatus for processing a warehousing logistics solution according to an embodiment of this application;
FIG. 12 is a block diagram of a terminal device according to an embodiment of this application; and
FIG. 13 is a block diagram of a server according to an embodiment of this application.

### DETAILED DESCRIPTION

To make a person skilled in the art better understand solutions of this application, the following clearly and completely describes the technical solutions in the embodiments of this application with reference to the accompanying drawings in the embodiments of this application. Apparently, the described embodiments are merely a part rather than all of the embodiments of this application. All other embodiments obtained by a person of ordinary skill in the art based on the embodiments of this application without creative efforts shall fall within the protection scope of this application.

In this specification, claims, and accompanying drawings of this application, the terms "first", "second", or the like are intended to distinguish between different objects but do not indicate a particular order. In addition, the terms "include", "have", and any variant thereof are intended to cover a non-exclusive inclusion. For example, a process, method, system, product, or device that includes a series of steps or units is not limited to the listed steps or units; and instead, further optionally includes a step or unit that is not listed, or further optionally includes another step or unit that is intrinsic to the process, method, product, or device.

"Embodiment" mentioned in this specification means that particular features, structures, or characteristics described with reference to the embodiment may be included in at least one embodiment of this application. The term appearing at different positions of this specification may not refer to the same embodiment or an independent or alternative embodiment that is mutually exclusive with another embodiment. It shall be explicitly and implicitly understood by a person skilled in the art that the embodiments described herein may be combined with other embodiments.

A warehousing logistics solution is an automatic solution selected by an enterprise to manage a warehouse efficiently. Briefly, a warehouse is divided into a stock area and a working area. The stock area is configured to place shelving units. The shelving unit is configured to store and manage goods, and each storage point on the shelving unit is referred to as a storage position. The working area is an area in which staff perform warehouse management and goods picking. A warehousing logistics solution adapting to a project requirement of a user greatly improves efficiency of performing warehouse management by the enterprise user.

Generally, a warehousing logistics automation solution (a warehousing logistics solution for short below) usually needs many links such as device model selection, solution design, and simulation verification. The solution design link is the most important, and is the most valuable link for enterprise users. However, in related arts and a current market, a system for processing a warehousing logistics solution used by a supplier of the warehousing logistics solution needs to frequently perform interaction with an enterprise user in a solution design link, to obtain solution requirements of the enterprise user. Consequently, the solution design cycle is long, prolonging an actual implementation cycle of a warehousing logistics project of the enterprise. In addition, after the warehousing logistics solution is designed, an existing system for processing a warehousing logistics solution can only provide a plan, and cannot three-dimensionally display details of the entire warehousing logistics solution in an intuitive and dynamic manner. Consequently, the system lacks intelligence, affecting use experience of the enterprise user.

To resolve the foregoing problems, the embodiments of this application provide a data processing method for a warehousing logistics solution and a system. Through data interaction between a terminal device and a server, a reference warehousing logistics solution is rapidly generated on the premise of conforming to a project requirement of a user, and the entire solution is three-dimensionally displayed in an intuitive and dynamic manner, for the user to view details of the solution. In this way, frequent interaction in a solution design process is reduced, solution design efficiency is improved, time costs of the enterprise user are reduced, functions of the system are enriched, and intelligence of the system is improved, thereby optimizing use experience of the enterprise user.

The following describes a system architecture of a system for processing a warehousing logistics solution according to an embodiment of this application.

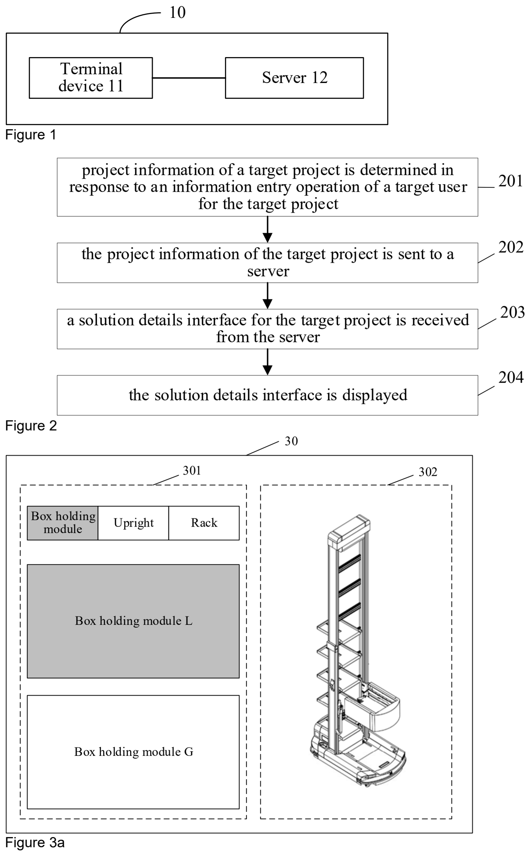

FIG. 1 is a schematic structural diagram of a system for processing a warehousing logistics solution according to an embodiment of this application. As shown in FIG. 1, a system 10 for processing a warehousing logistics solution includes a terminal device 11 and a server 12. The terminal device 11 is communicatively connected to the server 12. The terminal device 11 is configured to perform data interaction with the server 12, and perform image display of related data sent by the server 12 on a front end, for example, display a solution details interface sent by the server 12, so that a user can intuitively view details of a reference warehousing logistics solution on a display screen of the terminal device 11. The terminal device 11 may be further configured to generate a corresponding instruction in response to a related user operation, and send the instruction to the server 12, so that the server 12 performs corresponding processing based on the instruction. The server 12 is configured to perform data interaction with the terminal device 11, and perform corresponding processing based on related data sent by the terminal device 11, for example, determine a reference warehousing logistics solution for a target project based on project information sent by the terminal device 11. The terminal device 11 may be an intelligent device that can display an image, for example, a mobile phone terminal, a tablet computer, a personal computer, a notebook computer, a virtual reality device, or an augmented reality device. The server 12 may be one server, or a server cluster including several servers, or a cloud computing service center.

The following describes a data processing method for a warehousing logistics solution according to an embodiment of this application.

FIG. 2 is a schematic flowchart of a data processing method for a warehousing logistics solution according to an embodiment of this application. The method is performed by the terminal device 11 shown in FIG. 1. As shown in FIG. 2, the method includes the following operations.

In block201: project information of a target project is determined in response to an information input operation of a target user for the target project.

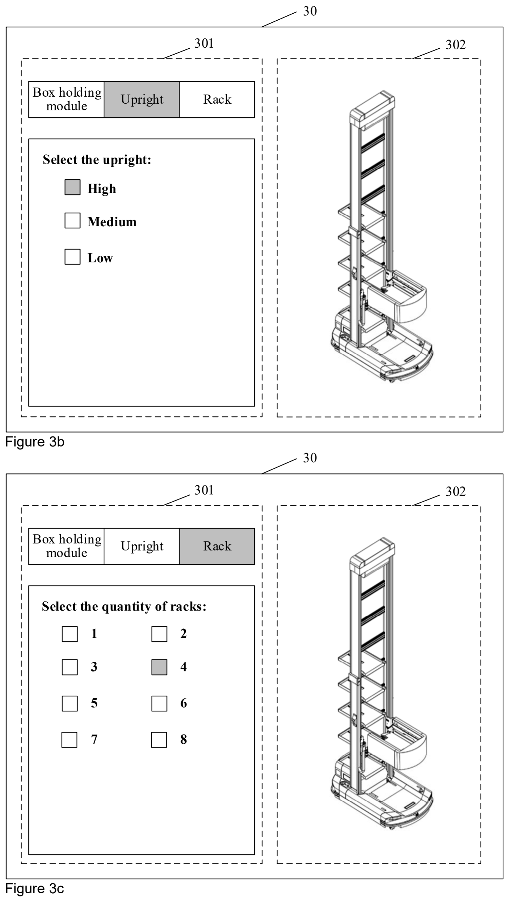

The target project is a warehousing logistics project. The project information is configuration information associated with the warehousing logistics project. The project information may include indicator parameters such as a warehousing robot model, a warehouse parameter, and a quantity of storage positions; may also include other indicator parameters, such as a service field; and may also include various indicator parameters in a computer aided design (CAD) document. Specifically, the project information may be determined by the target user according to an actual situation of the target project and obtained by performing an information input operation by the target user. A warehousing robot is a hardware device that executes inbound and outbound tasks of goods in a warehousing logistics solution. Warehousing robots of different models have different device parameters, such as minimum passage widths and maximum warehousing heights. The user may select a warehousing robot model according to an actual requirement of the target project. As shown in FIG. 3a, a warehousing robot model selection interface 30 displayed by the terminal device includes a parameter selection area 301 and an effect display area 302. The parameter selection area 301 includes a plurality of clickable function controls, configured to indicate various parameters of a warehousing robot, such as a box holding module, an upright, and a rack. The user may select a specific parameter in the parameter selection area 301 according to the actual requirement of the target project. For example, when the user clicks on the function control indicating the box holding module, the function control is highlighted, and sub controls, for example, a box holding module L and a box holding module G, configured to indicate specific models of the box holding module mounted on the warehousing robot, are displayed. The user may make a selection by using a click operation. After the user completes the selection, for example, selects the box holding module L, the sub control configured to indicate the box holding module L in the parameter selection area 301 is highlighted, and the warehousing robot on which the box holding module L is mounted is displayed in the effect display area 302, to facilitate the user to preview an effect. For another example, when the user clicks on the function control indicating the upright, as shown in FIG. 3b, the function control is highlighted, and optional parameters of the upright, for example, high, medium, and low, used for indicating heights of the upright of the warehousing robot, are displayed in the area 301. The user may make a selection by using a click operation. After the user completes the selection, for example, selects an option with the parameter being high, a check box corresponding to the corresponding parameter is highlighted in the area 301, and the warehousing robot with the parameter of the upright being high is displayed in the effect display area 302, to facilitate the user to preview an effect. For still another example, when the user clicks on the function control indicating the rack, as shown in FIG. 3c, the function control is highlighted, and an optional parameter of the rack, for example, a quantity of racks, is displayed in the area 301. The optional quantity ranges from 1 to 8. The user may make a selection by using a click operation. After the user completes the selection, for example, selects an option with the quantity of racks being 4, a check box corresponding to the digit 4 is highlighted in the area 301, and the warehousing robot with the quantity of racks being 4 is displayed in the effect display area 302, to facilitate the user to preview an effect. It may be understood that, the warehousing robot displayed in the effect display area 302 conforms to all the parameters selected by the user. For example, when the user selects the box holding module L, the upright height with the parameter being high, and the quantity of racks being 4, the warehousing robot displayed in the effect display area 302 should conform to all the selected parameters.

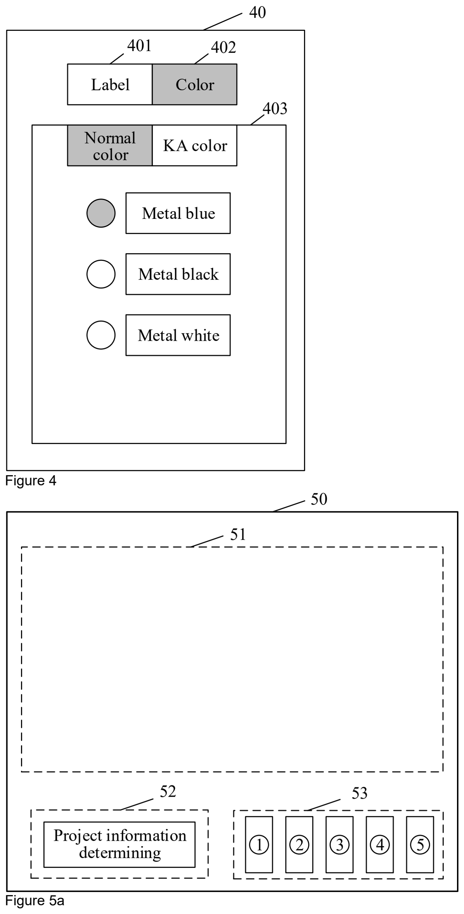

In addition, the user may further change another configuration of the selected warehousing robot, for example, a label or a color. As shown in FIG. 4, a warehousing robot information configuration interface 40 displayed by the terminal device includes a function control 401 configured to indicate label information and a function control 402 configured to indicate color information. When the user clicks on the function control 401 or the function control 402, the clicked-on function control is highlighted, and a corresponding function interface is displayed. For example, when the user clicks on the function control 402, the function control 402 is highlighted, and a color configuration interface 403 of the warehousing robot is displayed. The interface 403 includes a function control configured to indicate a normal color and a function control configured to indicate a KA color. When the user clicks on the function control, the clicked-on function control is highlighted, and corresponding color options are displayed. For example, when the user clicks on the function control configured to indicate the normal color, the function control is highlighted, and color selection types corresponding to the normal color, for example, metal blue, metal black, and metal white, are displayed. The user may select a corresponding color by using a click operation, and a check box corresponding to the selected color is highlighted, so that the user can intuitively see each operation performed by the user on the terminal device, thereby optimizing user experience.

The warehouse parameter is used for indicating a shape, a size, and the like of a warehouse. When the user has determined a warehouse address in an actual scene, indicator data of the warehouse parameter may be determined based on a parameter of the warehouse address. The quantity of storage positions may be a maximum warehousing capacity estimated by the user according to historical performance and a project situation, to ensure that the quantity of storage positions in the warehouse is sufficient to support an actual service.

In a possible example, the determining project information of the target project in response to the information input operation of the target user for the target project includes: displaying an editable interface for the target project in response to an upload operation of the target user for an auxiliary design document of the target project, where the editable interface includes a module placement area, a plurality of draggable modules, and a project information determining area, and the draggable module is used for indicating the hardware device; updating the module placement area in response to a placement operation of the target user for one or more draggable modules in the plurality of draggable modules, and displaying an updated module placement area, where the placement operation is an operation of dragging the one or more draggable modules into the module placement area; and determining, in response to a user operation of the target user for the project information determining area, the project information of the target project based on the updated module placement area.

The target user completely designs or incompletely designs an implementation layout of the warehousing logistics solution by using related drawing software (for example, CAD software), to obtain a CAD document for the target project.

When the information input operation performed by the target user is an upload operation for the CAD document of the target project, the terminal device directly displays an editable interface corresponding to the CAD document on a front end. For example, FIG. 5a is an exemplary simplified diagram of the editable interface according to an embodiment of this application. As shown in FIG. 5a, an editable interface 50 includes a module placement area 51, a project information determining area 52, and a draggable module display area 53. A plurality of draggable modules (for example, draggable modules ① to ⑤ in FIG. 5a) are displayed in the draggable module display area 53. The module placement area 51 is used for three-dimensionally displaying the implementation layout of the warehousing logistics solution. The project information determining area 52 may include a project information determining function control. Different draggable modules in the plurality of draggable modules indicate hardware devices of different models, for example, warehousing robots of different models, or shelving units of different models. The draggable module may be dragged by the target user into the module placement area 51, to change an image three-dimensionally displayed in the module placement area (that is, change the implementation layout of the currently designed warehousing logistics solution). For example, a hardware device indicated by the draggable module ① is a shelving unit A. The target user drags the draggable module ① into a target position in the module placement area 51. The terminal device updates a module placement area in which the shelving unit A is placed at the target position, and displays the updated module placement area. It may be understood that, the placement operation may be repeated for a plurality of times, that is, the target user may attempt to place different hardware devices for a plurality of times, to ensure that the designed warehousing logistics solution conforms to a project requirement. When the target user is satisfied with the currently designed solution, the target user may determine the project information by using a user operation for the project information determining area 52, for example, a click operation for the project information determining function control. The terminal device determines, based on the module placement area 51 in this case, the project information determined by the target user. Specifically, the project information may be a shelving unit layout and a hardware device parameter displayed in the module placement area 51.

It can be seen that, in this example, when the information input operation performed by the target user is the upload operation for the CAD document of the target project, the terminal device may respond to the operation, and display the editable interface corresponding to the target project on the front end. The editable interface supports the target user in performing customized modification on the implementation layout of the warehousing logistics solution in a module dragging manner. After responding to a project information determining operation of the user, the terminal device determines the project information approved by the target user. In this way, at a solution design stage, the target user can intuitively view the warehousing logistics solution in the design process, and can freely modify a hardware device layout, so that functions of a system are enriched, and intelligence of the system is improved, thereby optimizing use experience of the user.

In a possible example, after the displaying an editable interface, the method further includes: displaying parameter information of a first draggable module in response to a user operation of the target user for the first draggable module, where the first draggable module is any one of the plurality of draggable modules; and changing, in response to a change operation of the target user for the parameter information of the first draggable module, the first draggable module to a second draggable module, where the second draggable module is the first draggable module with the parameter information being changed.

The user operation may be a click operation, or may be another user operation. For example, the user operation may be a double-click operation when a display screen of the terminal device is a touch screen, or may be a cursor floating operation of a mouse when terminal device is a computer connected to the mouse. This is not uniquely limited herein.

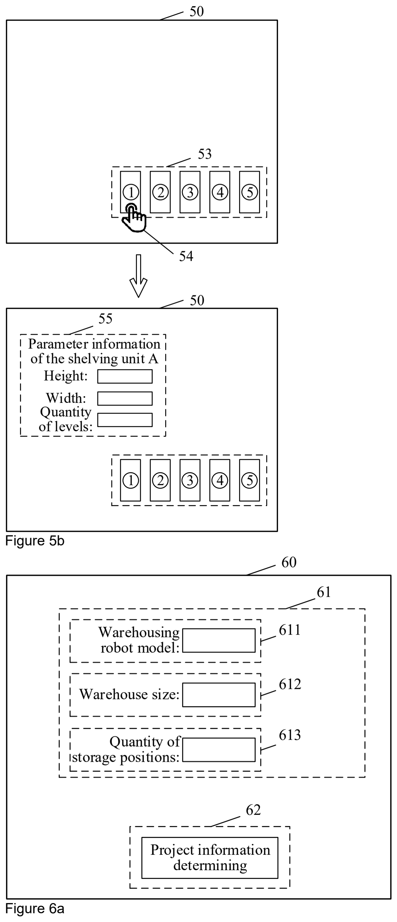

For example, FIG. 5b is an exemplary simplified diagram of another editable interface according to an embodiment of this application. As shown in FIG. 5b, an editable interface 50 includes a draggable module display area 53. A plurality of draggable modules (for example, draggable modules ① to ⑤) are displayed in the draggable module display area 53. A hardware device indicated by the draggable module ① is a shelving unit A. When the user performs a user operation for the draggable module ①, for example, a click operation 54, parameters related to the shelving unit A, such as a height, a width, and a quantity of levels, are displayed in a module parameter display area 55 on the editable interface 50. The user may further perform a change operation for parameter information of the draggable module ①, for example, perform a modification operation for each parameter in the module parameter display area 55, to obtain the draggable module ① with changed parameter information.

It can be seen that, in this example, the terminal device may further display the parameter information of the draggable module in response to the user operation of the user for the draggable module, so that the user can view and modify the parameter information of the draggable module, to adapt to the project requirement of the target project. In this way, the functions of the system are enriched, and the intelligence of the system is improved, thereby optimizing use experience of the user.

In a possible example, the determining project information of the target project in response to the information input operation of the target user for the target project includes: displaying, in response to the information input operation of the target user for the target project in a project information input area on an information input interface, information entered by the target user in the project information input area; and determining, in response to a user operation of the target user for a project information determining area on the information input interface, the project information of the target project based on the information displayed in the project information input area.

For some other enterprise users, project requirements of target projects of the enterprise users are not clear. For example, only specific information such as a warehousing robot model, a warehouse size, and a quantity of storage positions needs to conform to the project requirements of the target projects, and other parameter indicators are not clearly required. In this case, a target user may directly input various indicator parameters required by the target project of the target user on the information input interface of the terminal device. In this case, the terminal device displays the information entered by the target user in response to the information input operation performed by the target user. When the user determines that the information has no error, the terminal device determines the project information based on entered data.

For example, FIG. 6a is an exemplary simplified diagram of an information input interface according to an embodiment of this application. As shown in FIG. 6a, an information input interface 60 includes a project information input area 61 and a project information determining area 62. The project information determining area 62 includes a project information determining function control. The project information input area 61 includes input areas of various indicator parameters, for example, a warehousing robot model input area 611, a warehouse size input area 612, and a quantity-of-storage-positions input area 613. The user may input a warehousing robot model corresponding to a target project in the area 611, may input a warehouse size corresponding to the target project in the area 612, and may input a quantity of storage positions corresponding to the target project in the area 613. It may be understood that, the area 61 may further include input areas of more indicator parameters, which may be specifically determined according to different situations. Alternatively, the user may not select to input the indicator parameters. After the indicator parameters have been input, the user may perform a click operation for the project information determining function control. In this case, the terminal device determines project information of the target project based on data input in the project information input area 61.

It can be seen that, in this example, when the information input operation performed by the target user is an input operation for indicator parameters, the terminal device displays, in response to the input operation, information input by the user, and further determines, in response to a user operation of the user for the project information determining area, the project information of the target project based on the information displayed in the project information input area, so that the user can freely input the indicator parameters required by the target project. In this way, functions of a system are enriched, and intelligence of the system is improved, thereby optimizing use experience of the user.

In a possible example, the project information input area includes a service field input area; and the determining project information of the target project in response to the information input operation of the target user for the target project includes: generating a first filtering instruction in response to the information input operation of the target user for a service field of the target project in the service field input area, where the first filtering instruction is used for indicating a server to filter a first solution set, and a solution in the first solution set is a solution conforming to the service field of the target project; receiving the first solution set from the server, and displaying the solution in the first solution set on the information input interface; marking, in response to a selection operation of the target user for one or more pieces of solution information in the first solution set, the one or more pieces of solution information as a selected state; and determining, in response to the user operation of the target user for the project information determining area, the project information of the target project based on the solution information in the selected state on the information input interface.

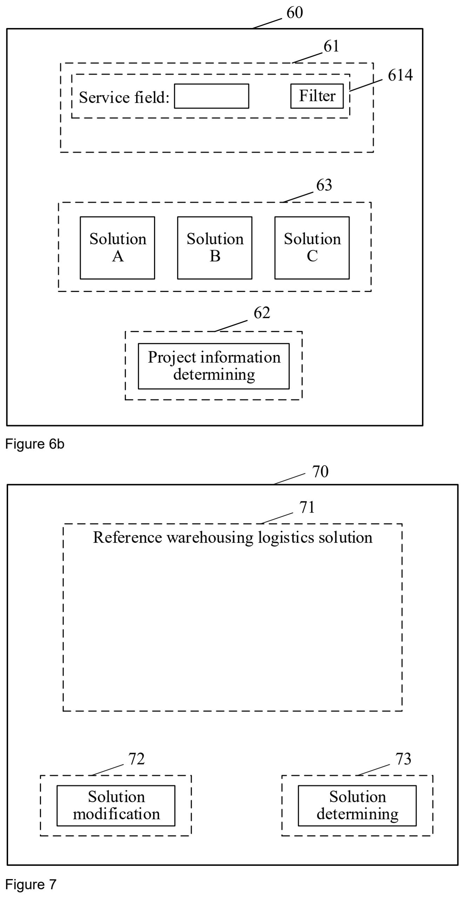

For example, FIG. 6b is an exemplary simplified diagram of another information input interface according to an embodiment of this application. As shown in FIG. 6b, an information input interface 60 includes a project information input area 61 and a project information determining area 62. The project information determining area 62 includes a project information determining function control. The project information input area 61 includes a service field input area 614. The area 614 further includes a filtering function control. The user may input a service field corresponding to a target project in the area 614, for example, a shoes and clothing service field, or an automobile part service field. When the user input only the service field corresponding to the target project in the area 614 and does not input other project information, if the user performs a click operation for the filtering function control, the terminal device generates a first filtering instruction and sends the first filtering instruction to the server, so that the server filters template solutions conforming to the service field corresponding to the target project, that is, a first solution set. When the first solution set is received, a solution in the first solution set may be displayed in a solution display area 63 on the information input interface 60. For example, if the service field input in the area 614 is shoes and clothing, solutions in the first solution set with the shoes and clothing service field, for example, a solution A, a solution B, and a solution C, are displayed in the solution display area 63. The user may click on any one of the solutions in the solution display area 63 to enter a solution information selection interface, and may view one or more pieces of solution information of the solution. In this case, a selection operation for the solution information may be performed. Optionally, a modification operation may be further performed for solution information, to modify specific data of each indicator parameter corresponding to the solution information, and then a selection operation is performed, to adapt to a requirement of the target project. The user operation for the information determining area on the information input interface may be specifically a click operation for the project information determining function control.

It can be seen that, in this example, when the user input only the service field of the target project, the terminal device may generate the first filtering instruction used for indicating the first solution set, and display the solution in the first solution set on a front end, for the user to perform viewing and an operation. In this way, the functions of the system are enriched, and the intelligence of the system is improved, thereby optimizing use experience of the user.

In block 202: the project information of the target project is sent to the server.

In block 203: a solution details interface for the target project is received from the server.

The solution details interface includes a display area for a reference warehousing logistics solution. The display area for the reference warehousing logistics solution is used for three-dimensionally displaying a reference warehousing logistics solution generated by the server for the target project based on the project information of the target project. The reference warehousing logistics solution includes a reference hardware solution and a reference software solution, the reference hardware solution is used for indicating a hardware device required when the target project is implemented according to the reference warehousing logistics solution, the hardware device includes a warehousing robot. The reference software solution includes a software function for implementing a warehousing function based on the warehousing robot. Specifically, the reference software solution may be a solution integrating a plurality of warehousing software systems. The plurality of warehousing software systems may be a warehouse control system (WCS), a warehouse executing system (WES), a warehouse management system (WMS), and the like. Which warehouse software systems are specifically integrated may be comprehensively determined according to a specific requirement of the target project and the reference hardware solution.

In block 204: the solution details interface is displayed.

In a possible example, the solution details interface includes a solution modification area and a solution determining area; and after the reference warehousing logistics solution is displayed, the method further includes: generating a solution modification instruction if a user operation of the target user for the solution modification area is detected, and sending the solution modification instruction to the server, where the solution modification instruction is used for indicating the server to generate an updated solution details interface; and receiving the updated solution details interface from the server; and/or generating a solution determining instruction if a user operation of the target user for the solution determining area is detected, and sending the solution determining instruction to the server, where the solution determining instruction is used for indicating the server to generate a target warehousing logistics solution based on the solution details interface currently displayed by the terminal device; and receiving a target simulation interface from the server, where the target simulation interface is generated based on the target warehousing logistics solution, the target simulation interface includes a simulation animation playing area, the simulation animation playing area is used for playing a target simulation animation, and the target simulation animation is process images of running the target project according to the target warehousing logistics solution; receiving the target simulation interface from the server; and playing the target simulation animation in response to a user operation of the target user for the simulation animation playing area.

For example, FIG. 7 is an exemplary simplified diagram of a solution details interface according to an embodiment of this application. As shown in FIG. 7, a solution details interface 70 includes a display area for a reference warehousing logistics solution 71, a solution modification area 72, and a solution determining area 73. The display area for the reference warehousing logistics solution 71 is used for three-dimensionally displaying a reference warehousing logistics solution generated by the server for a target project based on project information of the target project. The solution modification area 72 includes a solution modification function control. The user operation for the solution modification area may be specifically a click operation for the solution modification function control and a modification operation for the project information in the reference warehousing logistics solution in the display area for the reference warehousing logistics solution 71. The solution determining area 73 includes a solution determining function control. The user operation for the solution determining area may be specifically a click operation for the solution determining function control. After the target user performs the user operation for the solution determining area, the warehousing logistics solution three-dimensionally displayed on the solution details interface is the target warehousing logistics solution finally determined by the target user.

In the related arts and the current market, after interaction related to a warehousing logistics solution is completed, a supplier of the warehousing logistics solution cannot provide, for a user, a simulation verification service for a determined target warehousing logistics solution on a same system, or cannot complete simulation verification on the entire solution. In this way, the system lacks intelligence, and the enterprise user cannot effectively evaluate feasibility of the solution, increasing a purchase risk of the enterprise user.

However, in this example, after the enterprise user determines the target warehousing logistics solution, the server performs full-process simulation running, namely, full-process simulation verification, based on the determined target warehousing logistics solution, and displays the full-process simulation running to the user through the terminal device. In this way, the user can watch a full process of running the target project according to the target warehousing logistics solution and various project data during the running, to further learn details of implementation of the entire solution, thereby effectively evaluating the feasibility of the solution.

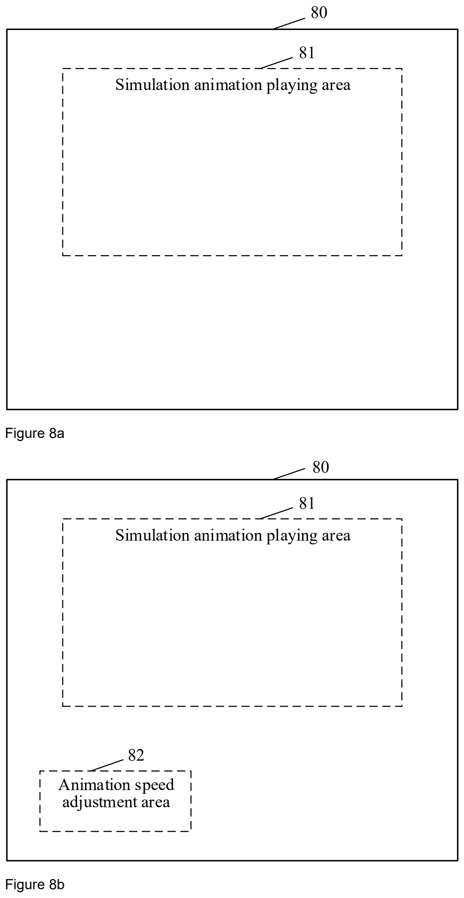

For example, FIG. 8a is an exemplary simplified diagram of a target simulation interface according to an embodiment of this application. As shown in FIG. 8a, a target simulation interface 80 includes a simulation animation playing area 81. Process images of performing simulation running of a target project according to a target warehousing logistics solution and various data during the running may be played in the simulation animation playing area 81. For example, one procedure of the target warehousing logistics solution is as follows: A worker scans a barcode or a two-dimensional code on a case A, so that a warehousing system obtains that a target storage position of the case A is a storage position 1 at a fourth level of a shelving unit 14. In this case, the warehousing system controls a warehousing robot B to automatically handle the case A. The warehousing robot B should be a robot that can normally perform storage work related to the fourth level of the shelving unit 14. For example, a maximum warehousing height of the warehousing robot B should reach the fourth level of the shelving unit 14, and a minimum passage width of the warehousing robot B should be less than a passage width of a passage at the shelving unit 14. During the simulation running, the user may view various data such as a current order status, a task status, and a device running status on a display screen of a workstation. Similarly, after the project is implemented in a reality scene, the user may view the same project data in the same area in the reality scene, to ensure consistency between a simulated simulation image and an actual running situation.

In response to the user operation of the target user for the target simulation animation playing area may be in response to a click operation of the target user for the target simulation animation playing area. Particularly, after receiving the target simulation interface, the terminal device may also automatically play the target simulation animation while displaying the target simulation interface.

It can be seen that, in this example, the solution details interface displayed by the terminal device further includes the solution modification area and the solution determining area. The terminal device responds to a related operation of the user, and performs corresponding data interaction with the server, so that the user can perform customized modification and determining on the reference warehousing logistics solution determined by the server, to ensure that details of the target warehousing logistics solution finally determined by the target user conform to an actual requirement of the target user. In this way, time consumed by the user for designing a detailed warehousing logistics solution for the target project is reduced, and solution determining efficiency is improved. In addition, after the solution is determined, the terminal device may display, through interaction with the server, the target simulation image generated by the server, and perform full-process simulation running of the target warehousing logistics solution, so that the enterprise user can effectively evaluate the feasibility of the solution. In this way, the enterprise user can complete an integrated process from solution design to solution determining and then to solution simulation verification by using only one system, so that a system for processing a warehousing logistics solution has richer functions and is more intelligent, thereby greatly reducing time costs and optimizing use experience of the user.

In a possible example, the target simulation interface further includes an animation speed adjustment area; and the method further includes: adjusting a playing speed of the target simulation animation in response to a user operation of the target user for the animation speed adjustment area.

For example, FIG. 8b is an exemplary simplified diagram of another target simulation interface according to an embodiment of this application. As shown in FIG. 8b, a target simulation interface 80 includes a simulation animation playing area 81 and an animation speed adjustment area 82. The user may perform a corresponding user operation for the animation speed adjustment area 82 on the terminal device, to adjust a playing speed of a target simulation animation in the simulation animation playing area 81.

The user operation of the target user for the animation speed adjustment area may be a selection operation of the target user for a playing speed option in the animation speed adjustment area, for example, the playing speed option may include a 1X speed, a 1.5X speed, a 2X speed, and a 3X speed, or the like; or may be a rotation operation of the target user for a playing speed adjustment knob in the animation speed adjustment area, for example, rotating the playing speed adjustment knob clockwise to increase the playing speed of the animation, or rotating the playing speed adjustment knob anticlockwise to reduce the playing speed of the animation.

It can be seen that, in this example, the target simulation interface displayed by the terminal device further includes the animation speed adjustment area, which can support the user in performing customized adjustment on the playing speed of the target simulation animation, and can effectively satisfy a user requirement when the user intends to quickly browse completeness of simulation running of the entire solution, thereby improving use experience of the user.

In a possible example, the playing speed of the target simulation animation is a 1X speed, and the target simulation interface further includes a simulation interaction function area; and the method further includes: generating a simulation interaction request instruction in response to a user operation of the target user for the simulation interaction function area, where the simulation interaction request instruction is used for indicating the server to generate a target virtual three-dimensional scene for function interaction; displaying the target virtual three-dimensional scene when the target virtual three-dimensional scene from the server is received; and invoking a target software solution in the target virtual three-dimensional scene in response to a function interaction operation of the target user in the target virtual three-dimensional scene, to cause the warehousing robot to execute a warehousing logistics task in the target virtual three-dimensional scene based on a task instruction corresponding to the function interaction operation.

That the playing speed of the target simulation animation is the 1X speed means that the target simulation animation is played at a normal speed, that is, the playing speed of the target simulation animation is synchronized with time in the real world. The user operation of the target user for the simulation interaction function area may be a click operation of the target user for a simulation interaction function control in the simulation interaction function area. The function interaction operation of the target user in the target virtual three-dimensional scene may be an operation of scanning a code of a case to make the case inbound, an operation of controlling a workstation, or the like. In this case, the terminal device invokes the target software solution in the target virtual three-dimensional scene. The target software solution may be a warehouse control system (WCS), a warehouse executing system (WES), a warehouse management system (WMS), or the like, to control a warehousing robot to execute a corresponding warehousing logistics task. For example, when the function interaction operation is an operation of scanning a code of a case B to make the case B inbound, the terminal device invokes a warehousing logistics software system to obtain that a target storage position of the case B is a storage position 1 at a first level of a shelving unit 1. In this case, a warehousing robot A adapting to the handling task is assigned to execute the warehousing logistics task. The warehousing robot A moves according to a planned route from the workstation to the storage position 1 at the first level of the shelving unit 1, and stores the goods B at the target storage position. Optionally, the planned route may also be a part of the target warehousing logistics solution.

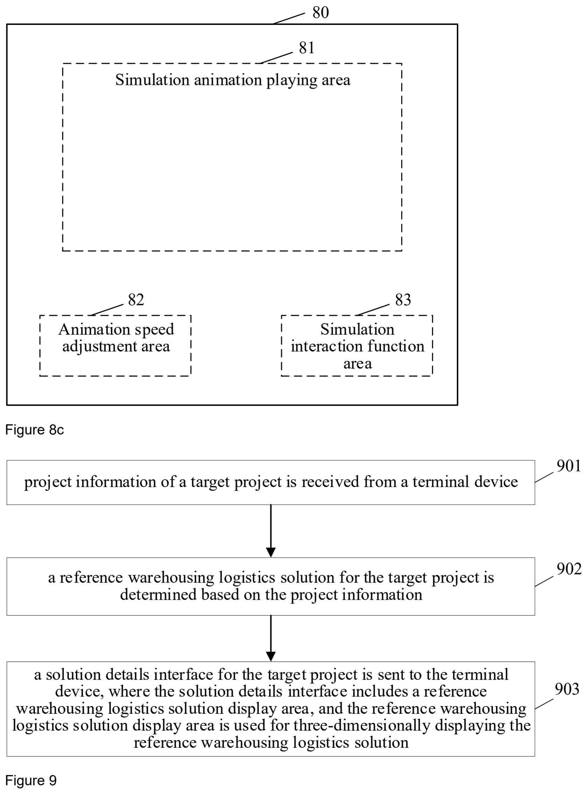

For example, FIG. 8c is an exemplary simplified diagram of still another target simulation interface according to an embodiment of this application. As shown in FIG. 8c, a target simulation interface 80 includes a simulation animation playing area 81, an animation speed adjustment area 82, and a simulation interaction function area 83. When a playing speed of a target simulation animation in the simulation animation playing area 81 is a 1X speed, the user may perform a corresponding user operation for the simulation interaction function area 83 on the terminal device, so that the terminal device generates a simulation interaction request instruction and sends the simulation interaction request instruction to the server. In this way, in response to the simulation interaction request instruction, the server can generate, according to a target warehousing logistics solution, a target virtual three-dimensional scene in which the user is allowed to perform function interaction. The target virtual three-dimensional scene is consistent with a scene displayed after a target project is actually implemented according to the target warehousing logistics solution. After the user enters the target virtual three-dimensional scene through the terminal device, the user may perform, in the target virtual three-dimensional scene, a function interaction operation, for example, an operation of scanning a case to make the case inbound, or an operation of controlling a workstation. The function interaction operation performed by the user in the target virtual three-dimensional scene is associated with a result of solution simulation verification.

It may be understood that, in this example, the terminal device is an intelligent device, for example, a virtual reality device, that can support the user in performing function interaction in a virtual three-dimensional scene.

It can be seen that, in this example, the target simulation interface displayed by the terminal device further includes the simulation interaction function area. When the playing speed of the simulation animation is the 1X speed, the simulation interaction request instruction is generated in response to the user operation, to indicate the server to generate the target virtual three-dimensional scene, to support the user in performing a function interaction operation in the target virtual three-dimensional scene through the terminal device, thereby simulating warehouse management, an inbound and outbound operation, and the like in an actual scene. In this way, functionality of the system is enriched, and the intelligence of the system is improved. In addition, the enterprise user may further train staff in advance based on the function, to reduce employee adaptation time after the project is implemented, thereby improving work efficiency.

It can be seen that, in the embodiments of this application, a terminal device determines project information in response to an information input operation of a user for a target project, and then displays, on a front end through data interaction with a server, a solution details interface of a reference warehousing logistics solution generated by the server, to three-dimensionally display the entire warehousing logistics solution in a visual manner. In this way, the user can intuitively view the reference warehousing logistics solution, and frequent interaction processes related to a project requirement are also reduced, so that functions of a system are enriched, and intelligence of the system is improved.

The following describes another data processing method for a warehousing logistics solution according to an embodiment of this application.

FIG. 9 is a schematic flowchart of another method for managing a warehousing logistics solution according to an embodiment of this application. The method is applied to the server 12 shown in FIG. 1. As shown in FIG. 9, the method includes the following operations.

In block 901: project information of a target project is received from a terminal device.

The target project is a warehousing logistics project, and the project information is configuration information associated with the warehousing logistics project. For details, reference may be made to detailed descriptions of operation in block 201 in the foregoing embodiments. Details are not described herein again.

In a possible example, before the receiving project information of a target project from a terminal device, the method further includes: filtering, if a first filtering instruction from the terminal device is received, a first solution set based on the first filtering instruction, where a solution in the first solution set is a solution conforming to a service field of the target project; and sending the first solution set to the terminal device.

The server pre-stores template solutions for warehousing logistics automation in various service fields, for example, a template solution for a shoes and clothing service field, and a template solution for an automobile part service field. Therefore, when a user performs filtering by using the service field of the target project as a filtering condition, the server may filter, based on the corresponding first filtering instruction, the first solution set conforming to the service field of the target project, and display the first solution set to the user through the terminal device. The user may further view or modify detailed information of the solution in the first solution set on the terminal device, and synthesize a situation of the target project, to input the project information.

It can be seen that, in this example, the server may filter, based on the first filtering instruction of the terminal device, the first solution set conforming to the service field of the target project, and send the first solution set to the terminal device, so that the user views the detailed information of the solution in the first solution set through the terminal device, to provide a reference for entering the project information, and enrich functions of a system for processing a warehousing logistics solution, thereby improving use experience of the user.

In block 902: a reference warehousing logistics solution for the target project is determined based on the project information.

The reference warehousing logistics solution includes a reference hardware solution and a reference software solution, the reference hardware solution is used for indicating a hardware device required when the target project is implemented according to the reference warehousing logistics solution, the hardware device includes a warehousing robot, and the reference software solution includes a software function for implementing a warehousing function based on the warehousing robot.

In a possible example, the determining a reference warehousing logistics solution for the target project based on the project information includes: detecting whether a first warehousing logistics solution exists in historical warehousing logistics solutions, where solution information of the first warehousing logistics solution is the same as the project information of the target project; and if the first warehousing logistics solution exists in the historical warehousing logistics solutions, determining that the first warehousing logistics solution is the reference warehousing logistics solution; or if the first warehousing logistics solution does not exist in the historical warehousing logistics solutions, determining a target shelving unit layout solution based on the project information, and determining the reference warehousing logistics solution according to the target shelving unit layout solution.

The historical warehousing logistics solutions may be historical cases determined based on high-quality evaluation provided by users after warehousing logistics solutions adapting to projects of the users are designed for the users. Such cases have a representative function. When a warehousing logistics solution has the same project information as the target project, the warehousing logistics solution may be preferentially used as the reference warehousing logistics solution and provided for the target user. If the first warehousing logistics solution having the same project information as the target project does not exist in the historical warehousing logistics solutions, the server automatically designs a solution for the target project. Specifically, the server may first determine a target layout solution of shelving units in a warehouse, and then determine an entire reference warehousing logistics solution based on the target layout solution of the shelving units.

For example, when the user selects all solution information of a template solution on the terminal device, for example, selects all solution information of a solution A as the project information of the target project, after the terminal device sends the project information to the server, the server detects a first warehousing logistics solution having the same project information as the target project. The first warehousing logistics solution is the template solution A.

It can be seen that, in this example, the server preferentially recommends, to the user, the first warehousing logistics solution having the same project information as the target project in the historical warehousing logistics solutions, to improve processing efficiency of the server while ensuring that the determined reference warehousing logistics solution has practical application significance.

In a possible example, the project information includes warehousing robot models and a warehouse parameter, and the warehouse parameter is used for indicating a shape and a size of a warehouse corresponding to the target project; and the determining a target shelving unit layout solution based on the project information includes: obtaining a minimum passage width and a maximum warehousing height corresponding to each of the warehousing robot models; determining a plurality of shelving unit layout solutions based on the minimum passage width, the maximum warehousing height, and the warehouse parameter; and filtering the target shelving unit layout solution in the plurality of shelving unit layout solutions.

When the project information input by the user on the terminal device includes the warehousing robot models and the warehouse size, the server may first determine, based on each of the warehousing robot models, device parameters, such as the minimum passage width and the maximum warehousing height, corresponding to each of the warehousing robot models, and then generate a warehousing shelving unit layout solution based on the device parameters and the warehouse size. For example, for a warehousing robot whose model is A, device parameters thereof include: a minimum passage width is 0.5 m, and a maximum warehousing height is 4 m. In this case, a plurality of warehousing shelving unit layout solutions may be generated. Different warehousing shelving unit layout solutions may be that warehousing shelving units have different parameters. For example, in different layout solutions, widths of intervals between levels of warehousing shelving units are different, that is, height limits of cases that can be stored at each level are different. When the project information entered by the user includes a height limit requirement for a stored case, warehousing shelving unit layout solutions conforming to the height limit requirement are preferentially filtered, and a target shelving unit layout solution is further filtered in the filtered shelving unit layout solutions.

It can be seen that, in this example, the server may determine the target shelving unit layout solution by using the warehousing robot models and the warehouse size that are input by the user, and further determine the reference warehousing logistics solution according to the target shelving unit layout solution, to improve a matching degree between the reference warehousing logistics solution and the target project.

In a possible example, the filtering the target shelving unit layout solution in the plurality of shelving unit layout solutions includes: filtering, in the plurality of shelving unit layout solutions, a shelving unit layout solution with a largest quantity of storage positions as the target shelving unit layout solution.

The quantity of storage positions determines a maximum warehousing capacity of the warehouse, and a plurality of reference layout solutions of warehousing shelving units are warehousing shelving unit layout solutions that already conform to a project requirement of the user. Therefore, to further optimize an actual warehousing logistics effect, in a process of filtering a target layout solution of the warehousing shelving units, the quantity of storage positions is used as a filtering condition, and a layout solution with a largest quantity of storage positions is selected as the target layout solution of the warehousing shelving units. In this way, on the premise of ensuring that the filtered target layout solution of the warehousing shelving units conforms to a basic requirement of the user, the maximum warehousing capacity of the warehouse can also be improved, and use space of the warehouse can be maximally used.

It can be seen that, in this example, in a process in which the server filters the layout solution of the warehousing shelving units, the quantity of storage positions is used as the filtering condition. In this way, on the premise of ensuring that the filtered target layout solution of the warehousing shelving units conforms to the basic requirement of the user, the maximum warehousing capacity of the warehouse can be improved, and the use space of the warehouse can be maximally used, so that functions of the system are enriched, and intelligence of the system is improved, thereby improving use experience of the user.

In block 903: a solution details interface for the target project is sent to the terminal device, where the solution details interface includes a display area for a reference warehousing logistics solution, and the display area for the reference warehousing logistics solution is used for three-dimensionally displaying the reference warehousing logistics solution.

In a possible example, the solution details interface includes a solution modification area and a solution determining area; and after the sending a solution details interface to the terminal device, the method further includes: updating, if a solution modification instruction from the terminal device is received, the reference warehousing logistics solution and the solution details interface based on the solution modification instruction, and sending an updated solution details interface to the terminal device, where the solution modification instruction is generated by the terminal device after a user operation of a target user for the solution modification area is detected; and/or determining, if a solution determining instruction from the terminal device is received, that a warehousing logistics solution on the solution details interface currently displayed by the terminal device is a target warehousing logistics solution, where the solution determining instruction is generated by the terminal device after a user operation of the target user for the solution determining area is detected.

The updating the reference warehousing logistics solution and the solution details interface based on the solution modification instruction may be specifically updating the reference warehousing logistics solution and the solution details interface based on a modification area and modification content that are indicated by the solution modification instruction. For example, in an original reference warehousing logistics solution, if a quantity of warehousing robots A is 2 and is modified by the user to 3, a modification area is a quantity area of the warehousing robots A, and modification content is changing 2 to 3, to update the reference warehousing logistics solution and a solution details interface, to ensure that details of the target warehousing logistics solution finally determined by the target user conform to an actual requirement of the target user.

It can be seen that, in this example, the solution details interface displayed by the terminal device further includes the solution modification area and the solution determining area. The terminal device responds to a related operation of the user, and performs corresponding data interaction with the server, so that the user can perform customized modification and determining on the reference warehousing logistics solution determined by the server, to ensure that details of the target warehousing logistics solution finally determined by the target user conform to the actual requirement of the target user. In this way, time consumed by the user for designing a detailed warehousing logistics solution for the target project is reduced, solution determining efficiency is improved, the functions of the system are enriched, and the intelligence of the system is improved.

In a possible example, after the determining that a warehousing logistics solution on the solution details interface currently displayed by the terminal device is a target warehousing logistics solution, the method further includes: generating a target simulation interface according to the target warehousing logistics solution, where the target simulation interface includes a simulation animation playing area, the simulation animation playing area is used for playing a target simulation animation, and the target simulation animation is process images of running the target project according to the target warehousing logistics solution; and sending the target simulation image to the terminal device.

It can be seen that, in this example, the target simulation interface generated by the server further includes the simulation interaction function area. When the playing speed of the simulation animation is the 1X speed, a target virtual three-dimensional scene is generated in response to the simulation interaction request instruction sent by the terminal device, to support the user in performing a function interaction operation in the target virtual three-dimensional scene through the terminal device, thereby simulating warehouse management, an inbound and outbound operation, and the like in an actual scene. In this way, functionality of the system is enriched, and the intelligence of the system is improved. In addition, the user may further train staff in advance based on the function, to reduce employee adaptation time after the project is implemented, thereby improving work efficiency.

In a possible example, the target simulation interface further includes an animation speed adjustment area, and the animation speed adjustment area is used for adjusting a playing speed of the target simulation animation.

It can be seen that, in this example, the target simulation interface generated by the server further includes the animation speed adjustment area, which can support the user in performing customized adjustment on the playing speed of the target simulation animation, and can effectively satisfy a user requirement when the user intends to quickly browse completeness of simulation running of the entire solution, thereby improving use experience of the user.

In a possible example, the playing speed of the target simulation animation is a 1X speed, and the target simulation interface further includes a simulation interaction function area; and after the sending the target simulation image to the terminal device, the method further includes: generating, when a simulation interaction request instruction from the terminal device is received, a target virtual three-dimensional scene for function interaction according to the target warehousing logistics solution, where the simulation interaction request instruction is generated by the terminal device in response to a user operation of the target user for the simulation interaction function area; and sending the target virtual three-dimensional scene to the terminal device.

It can be seen that, in this example, the target simulation interface generated by the server further includes the simulation interaction function area. When the playing speed of the simulation animation is the 1X speed, a target virtual three-dimensional scene is generated in response to the simulation interaction request instruction sent by the terminal device, to support the user in performing a function interaction operation in the target virtual three-dimensional scene through the terminal device, thereby simulating warehouse management, an inbound and outbound operation, and the like in an actual scene. In this way, functionality of the system is enriched, and the intelligence of the system is improved. In addition, the user may further train staff in advance based on the function, to reduce employee adaptation time after the project is implemented, thereby improving work efficiency.

It can be seen that, in the embodiments of this application, a server determines, through data interaction with a terminal device, a reference warehousing logistics solution for a target project based on project information entered by a user on the terminal device, and sends, to the terminal device, a solution details interface on which the reference warehousing logistics solution can be three-dimensionally displayed. In this way, the user can intuitively view details of the reference warehousing logistics solution, and frequent interaction processes related to a project requirement are also reduced, so that solution determining efficiency is improved, functions of a system are enriched, and intelligence of the system is improved.

In another possible example, the system for processing a warehousing logistics solution further includes a device model selection functional module. The device model selection functional module is configured to display various warehousing devices. The warehousing device may be a warehousing robot. The user may view and select models and functions of the various warehousing robots on a device display interface displayed by the terminal device. After the user selects a warehousing robot, a model of the warehousing robot and a quantity of warehousing robots are used as the project information of the target project for corresponding data processing. In addition, the user can further view three-dimensional models and running examples of the various warehousing robots on the device display interface, which is beneficial to understanding the warehousing devices by the user, and is convenient for subsequent work to be performed.

In another possible example, the system for processing a warehousing logistics solution further includes an automatic quote functional module. After the user determines the target warehousing logistics solution, the system may automatically generate a quotation and a contract according to specific details of the target warehousing logistics solution, such as a model and a quantity of purchased devices, a related simulation verification service, and a training service. The user may determine and sign the contract online, and perform payment according to a payment protocol, greatly shortening a purchase delivery date and reducing costs, and improving project implementation efficiency.

In another possible example, the system for processing a warehousing logistics solution further includes an after-sales service module. The after-sales service module is configured to provide, for the user, corresponding after-sales services, such as a delivery progress, an installation progress, and an operational status after online, thereby improving use experience of the user.

It can be known from the foregoing content that, in the embodiments of this application, a system for processing a warehousing logistics solution that can three-dimensionally display a designed warehousing logistics solution is provided for an enterprise user. The system can generate a complete warehousing logistics solution based on diversified project requirements of the enterprise user, to reduce frequent interaction in a solution design process, thereby improving solution design efficiency, and reducing time costs of the enterprise user. In addition, the designed warehousing logistics solution can be three-dimensionally displayed in a visual manner, and details of the entire solution are presented to the user, to greatly improve intelligence and functional richness of the system, thereby improving use experience of the enterprise user.

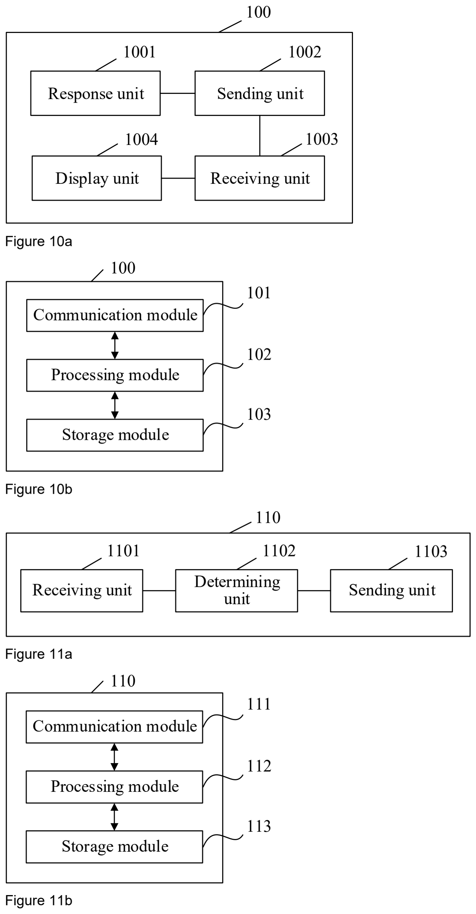

Consistent with the foregoing embodiments, FIG. 10a is a composition block diagram of functional units of an apparatus for processing a warehousing logistics solution according to an embodiment of this application. The apparatus is used in the terminal device 11 shown in FIG. 1. An apparatus 100 for processing a warehousing logistics solution includes a response unit 1001, configured to determine project information of a target project in response to an information input operation of a target user for the target project, where the target project is a warehousing logistics project, and the project information is configuration information associated with the warehousing logistics project; a sending unit 1002, configured to send the project information of the target project to a server; a receiving unit 1003, configured to receive, from the server, a solution details interface for the target project, where the solution details interface includes a display area for a reference warehousing logistics solution, the display area for the reference warehousing logistics solution is used for three-dimensionally displaying a reference warehousing logistics solution generated by the server for the target project, the reference warehousing logistics solution includes a reference hardware solution and a reference software solution, the reference hardware solution is used for indicating a hardware device required when the target project is implemented according to the reference warehousing logistics solution, the hardware device includes a warehousing robot, and the reference software solution includes a software function for implementing a warehousing function based on the warehousing robot; and a display unit 1004, configured to display the solution details interface.

It may be understood that, because the method embodiments and the apparatus embodiments are different presentation forms of the same technical concept, content of the method embodiment part in this application should be synchronously adapted to the apparatus embodiment part. Details are not described herein again.

When integrated units are used, as shown in FIG. 10b, FIG. 10b is a composition block diagram of functional units of another apparatus for processing a warehousing logistics solution according to an embodiment of this application. In FIG. 10b, an apparatus 100 for processing a warehousing logistics solution includes a communication module 101 and a processing module 102. The processing module 102 is configured to perform control and management on actions of the apparatus for processing a warehousing logistics solution, for example, perform the steps of the response unit 1001, the sending unit 1002, the receiving unit 1003, and the display unit 1004; and/or configured to perform other processes of the technology described in this specification. The communication module 101 is configured to support communication between the apparatus for processing a warehousing logistics solution and another device. As shown in FIG. 10b, the apparatus for processing a warehousing logistics solution may further include a storage module 103. The storage module 103 is configured to store program code and data of the apparatus for processing a warehousing logistics solution.

The processing module 102 may be a processor or a controller, for example, may be a central processing unit (CPU), a general-purpose processor, a digital signal processor (DSP), an ASIC, an FPGA, another programmable logic device, a transistor logic device, a hardware component, or any combination thereof. The processor may implement or execute various example logical blocks, modules, and circuits described with reference to content disclosed in this application. The processor may alternatively be a combination to implement a computing function, for example, may be a combination of one or more microprocessors, or a combination of a DSP and a microprocessor. The communication module 101 may be a transceiver, an RF circuit, a communication interface, or the like. The storage module 103 may be a memory.

For all related content in the scenes involved in the foregoing method embodiments, reference may be made to functional descriptions of corresponding functional modules. Details are not described herein again. The apparatus 100 for processing a warehousing logistics solution can perform the method for processing a warehousing logistics solution shown in FIG. 2.

Consistent with the foregoing embodiments, FIG. 11a is a composition block diagram of functional units of still another apparatus for processing a warehousing logistics solution according to an embodiment of this application. The apparatus is used in the server 12 shown in FIG. 1. An apparatus 110 for processing a warehousing logistics solution includes a receiving unit 1101, configured to receive project information of a target project from a terminal device, where the target project is a warehousing logistics project, and the project information is configuration information associated with the warehousing logistics project; a determining unit 1102, configured to determine a reference warehousing logistics solution for the target project based on the project information, where the reference warehousing logistics solution includes a reference hardware solution and a reference software solution, the reference hardware solution is used for indicating a hardware device required when the target project is implemented according to the reference warehousing logistics solution, the hardware device includes a warehousing robot, and the reference software solution includes a software function for implementing a warehousing function based on the warehousing robot; and a sending unit 1103, configured to send a solution details interface for the target project to the terminal device, where the solution details interface includes a display area for the reference warehousing logistics solution, and the display area for the reference warehousing logistics solution is used for three-dimensionally displaying the reference warehousing logistics solution.

It may be understood that, because the method embodiments and the apparatus embodiments are different presentation forms of the same technical concept, content of the method embodiment part in this application should be synchronously adapted to the apparatus embodiment part. Details are not described herein again.

When integrated units are used, as shown in FIG. 11b, FIG. 11b is a composition block diagram of functional units of yet another apparatus for processing a warehousing logistics solution according to an embodiment of this application. In FIG. 11b, an apparatus 110 for processing a warehousing logistics solution includes a communication module 111 and a processing module 112. The processing module 112 is configured to perform control and management on actions of the apparatus for processing a warehousing logistics solution, for example, perform the steps of the receiving unit 1101, the determining unit 1102, and the sending unit 1103; and/or configured to perform other processes of the technology described in this specification. The communication module 111 is configured to support communication between the apparatus for processing a warehousing logistics solution and another device. As shown in FIG. 11b, the apparatus for processing a warehousing logistics solution may further include a storage module 113. The storage module 113 is configured to store program code and data of the apparatus for processing a warehousing logistics solution.

The processing module 112 may be a processor or a controller, for example, may be a central processing unit (CPU), a general-purpose processor, a digital signal processor (DSP), an ASIC, an FPGA, another programmable logic device, a transistor logic device, a hardware component, or any combination thereof. The processor may implement or execute various example logical blocks, modules, and circuits described with reference to content disclosed in this application. The processor may alternatively be a combination to implement a computing function, for example, may be a combination of one or more microprocessors, or a combination of a DSP and a microprocessor. The communication module 111 may be a transceiver, an RF circuit, a communication interface, or the like. The storage module 113 may be a memory.

For all related content in the scenes involved in the foregoing method embodiments, reference may be made to functional descriptions of corresponding functional modules. Details are not described herein again. The apparatus 110 for processing a warehousing logistics solution can perform the method for processing a warehousing logistics solution shown in FIG. 9.

All or some of the foregoing embodiments may be implemented by using software, hardware, firmware, or any combination thereof. When software is used to implement embodiments, the foregoing embodiments may be implemented entirely or partially in a form of a computer program product. The computer program product includes one or more computer instructions or computer programs. When the computer instructions or the computer programs are loaded and executed on a computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state disk.

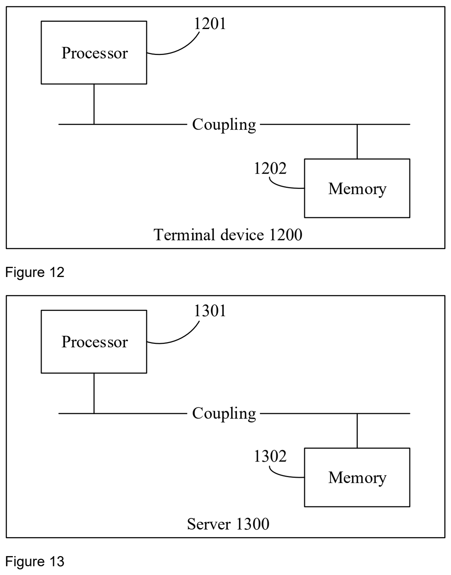

FIG. 12 is a block diagram of a terminal device according to an embodiment of this application. As shown in FIG. 12, a terminal device 1200 may include the following one or more components: a processor 1201, and a memory 1202 coupled to the processor 1201. The memory 1202 may store one or more computer programs. The one or more computer programs may be configured to, when executed by the one or more processors 1201, implement the methods described in the foregoing embodiments. The terminal device 1200 may be the terminal device 11 in the foregoing embodiments.

The processor 1201 may include one or more processing cores. The processor 1201 connects to various parts of the terminal device 1200 using various interfaces and lines. By running or executing instructions, programs, code sets, or instruction sets stored in the memory 1202, and invoking data stored in the memory 1202, the processor 1201 performs various functions and data processing of the terminal device 1200. Optionally, the processor 1201 may be implemented by using at least one hardware form of a digital signal processor (DSP), a field-programmable gate array (FPGA), and a programmable logic array (PLA). The processor 1201 may integrate one or a combination of some of a central processing unit (CPU), a graphics processing unit (GPU), a modem, and the like. The CPU mainly processes an operating system, a user interface, an application program, and the like. The GPU is configured to be responsible for rendering and drawing display content. The modem is configured to process wireless communication. It may be understood that, the modem may also not be integrated into the processor 1201, but may be implemented by a communication chip alone.

The memory 1202 may include a random access memory (RAM), or may include a read-only memory (ROM). The memory 1202 may be configured to store the instructions, the programs, code, the code sets, or the instruction sets. The memory 1202 may include a storage program area and a storage data area, where the storage program area may store an instruction used for implementing an operating system, an instruction used for implementing at least one function (for example, a touch function, a sound playing function, or an image playing function), and an instruction used for implementing the foregoing method embodiments. The data storage area may store data created during use of the terminal device 1200.

It may be understood that, the terminal device 1200 may include more or fewer structural elements than those shown in the foregoing structural block diagram. This is not limited herein.

FIG. 13 is a block diagram of a server according to an embodiment of this application. As shown in FIG. 13, a server 1300 may include the following one or more components: a processor 1301, and a memory 1302 coupled to the processor 1301. The memory 1302 may store one or more computer programs. The one or more computer programs may be configured to, when executed by the one or more processors 1301, implement the methods described in the foregoing embodiments. The server 1300 may be the server 12 in the foregoing embodiments.

The processor 1301 may include one or more processing cores. The processor 1301 connects to various parts of the server 1300 using various interfaces and lines. By running or executing instructions, programs, code sets, or instruction sets stored in the memory 1302, and invoking data stored in the memory 1302, the processor 1301 performs various functions and data processing of the server 1300. Optionally, the processor 1301 may be implemented by using at least one hardware form of a digital signal processor (DSP), a field-programmable gate array (FPGA), and a programmable logic array (PLA). The processor 1301 may integrate one or a combination of some of a central processing unit (CPU), a graphics processing unit (GPU), a modem, and the like. The CPU mainly processes an operating system, a user interface, an application program, and the like. The GPU is configured to be responsible for rendering and drawing display content. The modem is configured to process wireless communication. It may be understood that, the modem may also not be integrated into the processor 1301, but may be implemented by a communication chip alone.

The memory 1302 may include a random access memory (RAM), or may include a read-only memory (ROM). The memory 1302 may be configured to store the instructions, the programs, code, the code sets, or the instruction sets. The memory 1302 may include a storage program area and a storage data area, where the storage program area may store an instruction used for implementing an operating system, an instruction used for implementing at least one function (for example, a touch function, a sound playing function, or an image playing function), and an instruction used for implementing the foregoing method embodiments. The data storage area may store data created during use of the server 1300.

It may be understood that, the server 1300 may include more or fewer structural elements than those shown in the foregoing structural block diagram. This is not limited herein.

An embodiment of this application further provides a computer storage medium, storing a computer program/instructions. The computer program/the instructions, when executed by a processor, implement some or all of the steps in any method described in the foregoing method embodiments.

An embodiment of this application further provides a computer program product. The computer program product includes a non-transitory computer-readable storage medium storing a computer program. The computer program is operable, to cause a computer to perform some or all of the steps in any method described in the foregoing method embodiments.

It should be understood that, sequence numbers of the foregoing processes do not mean execution sequences in embodiments of this application. The execution sequences of the processes should be determined based on functions and internal logic of the processes, and should not constitute any limitation on implementation processes of embodiments of this application. In the several embodiments provided in this application, it should be understood that the disclosed method and system may be implemented in other manners.

Although the present invention is disclosed above, the present invention is not limited thereto. Any person skilled in the art may easily conceive of changes or replacements without departing from the spirit and scope of the present invention, and may make various changes and modifications, including combinations of the foregoing different functions and implementation steps, and software and hardware implementations, all of which fall within the protection scope of the present invention.

## Claims

1. A data processing method for a warehousing logistics solution, performed by a terminal device of a system for processing a warehousing logistics solution, wherein the system for processing the warehousing logistics solution comprises the terminal device and a server, and the method comprises:
determining project information of a target project in response to an information input operation of a target user for the target project, wherein the target project is a warehousing logistics project, and the project information is configuration information associated with the warehousing logistics project;
sending the project information of the target project to the server;
receiving, from the server, a solution details interface for the target project, wherein the solution details interface comprises a display area for a reference warehousing logistics solution, the display area for the reference warehousing logistics solution is used for three-dimensionally displaying the reference warehousing logistics solution generated by the server for the target project, the reference warehousing logistics solution comprises a reference hardware solution and a reference software solution, the reference hardware solution is used for indicating a hardware device required when the target project is implemented according to the reference warehousing logistics solution, the hardware device comprises a warehousing robot, and the reference software solution comprises a software function for implementing a warehousing function based on the warehousing robot; and
displaying the solution details interface.

2. The method according to claim 1, wherein the determining project information of the target project in response to the information input operation of the target user for the target project comprises:
displaying an editable interface for the target project in response to an upload operation of the target user for an auxiliary design document of the target project, wherein the editable interface comprises a module placement area, a plurality of draggable modules, and a project information determining area, and the draggable module is used for indicating the hardware device;
updating the module placement area in response to a placement operation of the target user for one or more draggable modules in the plurality of draggable modules, and displaying an updated module placement area, wherein the placement operation is an operation of dragging the one or more draggable modules into the module placement area; and
determining, in response to a user operation of the target user for the project information determining area, the project information of the target project based on the updated module placement area.

3. The method according to claim 2, wherein after the displaying the editable interface, the method further comprises:
displaying parameter information of a first draggable module in response to a user operation of the target user for the first draggable module, wherein the first draggable module is any one of the plurality of draggable modules; and
changing, in response to a change operation of the target user for the parameter information of the first draggable module, the first draggable module to a second draggable module, wherein the second draggable module is the first draggable module with the parameter information being changed.

4. The method according to claim 1, wherein the determining project information of the target project in response to the information input operation of the target user for the target project comprises:
displaying, in response to the information input operation of the target user for the target project in a project information input area on an information input interface, information input by the target user in the project information input area; and
determining, in response to a user operation of the target user for a project information determining area on the information input interface, the project information of the target project based on the information displayed in the project information input area.

5. The method according to claim 4, wherein the project information input area comprises a service field input area; and the determining project information of the target project in response to the information input operation of the target user for the target project comprises:
generating a first filtering instruction in response to the information input operation of the target user for a service field of the target project in the service field input area, wherein the first filtering instruction is used for indicating the server to filter a first solution set, and a solution in the first solution set is a solution conforming to the service field of the target project;
receiving the first solution set from the server, and displaying the solution in the first solution set on the information input interface;
marking, in response to a selection operation of the target user for one or more pieces of solution information in the first solution set, the one or more pieces of solution information as a selected state; and
determining, in response to the user operation of the target user for the project information determining area, the project information of the target project based on the solution information in the selected state on the information input interface.

6. The method according to claim 1, wherein the solution details interface comprises a solution modification area and a solution determining area; and after the reference warehousing logistics solution is displayed, the method further comprises:
generating a solution modification instruction if a user operation of the target user for the solution modification area is detected, and sending the solution modification instruction to the server, wherein the solution modification instruction is used for indicating the server to generate an updated solution details interface; and receiving the updated solution details interface from the server; and/or
generating a solution determining instruction if a user operation of the target user for the solution determining area is detected, and sending the solution determining instruction to the server, wherein the solution determining instruction is used for indicating the server to generate a target warehousing logistics solution based on the solution details interface currently displayed by the terminal device; and receiving a target simulation interface from the server, wherein the target simulation interface is generated based on the target warehousing logistics solution, the target simulation interface comprises a simulation animation playing area, the simulation animation playing area is used for playing a target simulation animation, and the target simulation animation is process images of running the target project according to the target warehousing logistics solution;
receiving the target simulation interface from the server; and
playing the target simulation animation in response to a user operation of the target user for the simulation animation playing area.

7. The method according to claim 6, wherein the target simulation interface further comprises an animation speed adjustment area; and the method further comprises:
adjusting a playing speed of the target simulation animation in response to a user operation of the target user for the animation speed adjustment area.

8. The method according to claim 6 or 7, wherein the playing speed of the target simulation animation is a 1X speed, and the target simulation interface further comprises a simulation interaction function area; and the method further comprises:
generating a simulation interaction request instruction in response to a user operation of the target user for the simulation interaction function area, wherein the simulation interaction request instruction is used for indicating the server to generate a target virtual three-dimensional scene for function interaction;
displaying the target virtual three-dimensional scene when the target virtual three-dimensional scene from the server is received; and
invoking the target software solution in the target virtual three-dimensional scene in response to a function interaction operation of the target user in the target virtual three-dimensional scene, to cause the warehousing robot to execute a warehousing logistics task in the target virtual three-dimensional scene based on a task instruction corresponding to the function interaction operation.

9. A data processing method for a warehousing logistics solution, performed by a server of a system for processing a warehousing logistics solution, wherein the system for processing a warehousing logistics solution comprises a terminal device and the server, and the method comprises:
receiving project information of a target project from the terminal device, wherein the target project is a warehousing logistics project, and the project information is configuration information associated with the warehousing logistics project;
determining a reference warehousing logistics solution for the target project based on the project information, wherein the reference warehousing logistics solution comprises a reference hardware solution and a reference software solution, the reference hardware solution is used for indicating a hardware device required when the target project is implemented according to the reference warehousing logistics solution, the hardware device comprises a warehousing robot, and the reference software solution comprises a software function for implementing a warehousing function based on the warehousing robot; and
sending a solution details interface for the target project to the terminal device, wherein the solution details interface comprises a display area for the reference warehousing logistics solution, and the display area for the reference warehousing logistics solution is used for three-dimensionally displaying the reference warehousing logistics solution.

10. The method according to claim 9, wherein the determining the reference warehousing logistics solution for the target project based on the project information comprises:
detecting whether a first warehousing logistics solution exists in historical warehousing logistics solutions,
wherein solution information of the first warehousing logistics solution is the same as the project information of the target project; and
if the first warehousing logistics solution exists in the historical warehousing logistics solutions, determining that the first warehousing logistics solution is the reference warehousing logistics solution; or
if the first warehousing logistics solution does not exist in the historical warehousing logistics solutions, determining a target shelving unit layout solution based on the project information; and
determining the reference warehousing logistics solution according to the target shelving unit layout solution.

11. The method according to claim 10, wherein the project information comprises warehousing robot models and a warehouse parameter, and the warehouse parameter is used for indicating a shape and a size of a warehouse corresponding to the target project; and the determining the target shelving unit layout solution based on the project information comprises:
obtaining a minimum passage width and a maximum warehousing height corresponding to each of the warehousing robot models;
determining a plurality of shelving unit layout solutions based on the minimum passage width, the maximum warehousing height, and the warehouse parameter; and
filtering the target shelving unit layout solution in the plurality of shelving unit layout solutions.

12. The method according to claim 11, wherein the filtering the target shelving unit layout solution in the plurality of shelving unit layout solutions comprises:
filtering, in the plurality of shelving unit layout solutions, a shelving unit layout solution with a largest quantity of storage positions as the target shelving unit layout solution.

13. The method according to claim 9, wherein the solution details interface comprises a solution modification area and a solution determining area; and after the sending the solution details interface to the terminal device, the method further comprises:
updating, if a solution modification instruction from the terminal device is received, the reference warehousing logistics solution and the solution details interface based on the solution modification instruction, and sending an updated solution details interface to the terminal device, wherein the solution modification instruction is generated by the terminal device after a user operation of a target user for the solution modification area is detected; and/or
determining, if a solution determining instruction from the terminal device is received, that a warehousing logistics solution on the solution details interface currently displayed by the terminal device is a target warehousing logistics solution, wherein the solution determining instruction is generated by the terminal device after a user operation of the target user for the solution determining area is detected.

14. The method according to claim 9, wherein before the receiving project information of the target project from the terminal device, the method further comprises:
filtering, if a first filtering instruction from the terminal device is received, a first solution set based on the first filtering instruction, wherein a solution in the first solution set is a solution conforming to a service field of the target project; and
sending the first solution set to the terminal device.

15. The method according to claim 13, wherein after the determining that the warehousing logistics solution on the solution details interface currently displayed by the terminal device is the target warehousing logistics solution, the method further comprises:
generating a target simulation interface according to the target warehousing logistics solution, wherein the target simulation interface comprises a simulation animation playing area, the simulation animation playing area is used for playing a target simulation animation, and the target simulation animation is process images of running the target project according to the target warehousing logistics solution; and
sending the target simulation image to the terminal device.

16. The method according to claim 15, wherein the target simulation interface further comprises an animation speed adjustment area, and the animation speed adjustment area is used for adjusting a playing speed of the target simulation animation.

17. The method according to claim 15 or 16, wherein the playing speed of the target simulation animation is a 1X speed, and the target simulation interface further comprises a simulation interaction function area; and after the sending the target simulation image to the terminal device, the method further comprises:
generating, when a simulation interaction request instruction from the terminal device is received, a target virtual three-dimensional scene for function interaction according to the target warehousing logistics solution, wherein the simulation interaction request instruction is generated by the terminal device in response to a user operation of the target user for the simulation interaction function area; and
sending the target virtual three-dimensional scene to the terminal device.

18. A terminal device, comprising a processor, a memory, and one or more programs, wherein the one or more programs are stored in the memory and configured to be executed by the processor, and the programs comprise instructions used for performing the steps in the method according to any one of claims 1 to 8.

19. A server, comprising a processor, a memory, and one or more programs, wherein the one or more programs are stored in the memory and configured to be executed by the processor, and the programs comprise instructions used for performing the steps in the method according to any one of claims 9 to 17.

20. A computer-readable storage medium, storing a computer program/instructions, wherein the computer program/ instructions, when executed by a processor, implement the steps in the method according to any one of claims 1 to 17.

21. A computer program product, comprising a computer program, wherein the computer program, when executed by a processor, implements the steps in the method according to any one of claims 1 to 17.

22. A system for processing a warehousing logistics solution, comprising a terminal device and a server, wherein the terminal device is configured to perform the method according to any one of claims 1 to 8, and the server is configured to perform the method according to any one of claims 9 to 17.
